# EUROPÄISCHE PATENTSCHRIFT

(11) **EP 3 899 679 B1**
(45) Veröffentlichungstag und Bekanntmachung des Hinweises auf die Patenterteilung: **28.12.2022**
(21) Anmeldenummer: 20718163.7
(22) Anmeldetag: 24.03.2020
(51) Int. Cl.: G06N 3/04, G06N 3/08, G05B 19/042, G05B 23/02, G05B 19/418

(54) **VERFAHREN UND VORRICHTUNG ZUR ÜBERWACHUNG EINES FRÄSPROZESSES**
METHOD AND DEVICE FOR MONITORING A MILLING PROCESS
PROCÉDÉ ET DISPOSITIF DE SURVEILLANCE D'UN PROCESSUS DE FRAISAGE

(30) Priorität: 29.03.2019 EP 19166079
(43) Veröffentlichungstag der Anmeldung: 27.10.2021
(73) Patentinhaber: Siemens Aktiengesellschaft, 80333 München (DE)
(72) Erfinder: OCHSENFELD, Henning, 90491 Nürnberg (DE); PETTIGREW, Liam, Petersham, New South Wales NSW 204 (AU); REIMANN, Thorsten, 91052 Erlangen (DE)
(86) Internationale Anmeldenummer: PCT/EP2020/058069
(87) Internationale Veröffentlichungsnummer: WO 2020/200903

(56) Entgegenhaltungen:
- US-A1- 2004 179 915
- US-A1- 2007 088 550
- US-A1- 2016 091 393
- US-B1- 8 781 982

## Beschreibung

Die Erfindung betrifft ein Verfahren und eine Vorrichtung zur Überwachung eines Fräsprozesses vorzugsweise mittels künstlicher Intelligenz.

Die Patentanmeldung US 2016/091393 A1 beschreibt ein Verfahren bzw. System zur Vorhersage und Planung in Produktionsstätten. Um eine Werkzeugabnutzung zu detektieren, wird dabei unter anderem die Leistung der Spindel überwacht. Um eine Werkzeugabnutzung zu kompensieren, wird die Leistung der Spindel und dadurch deren Drehgeschwindigkeit erhöht. Dabei wird der langfristige Trend der Leistung der Spindel extrapoliert, um eine Restnutzungsdauer vorherzusagen.

Die Patentanmeldung US 2007/088550 A1 beschreibt ein Verfahren zur vorherschauenden Wartung einer Maschine. Zu diesem Zweck werden Daten betreffend den Betrieb der Maschine, wie bspw. Vibration, Geschwindigkeit oder Strom erfasst. Aus diesen Daten werden sog. features erzeugt, um eine Fehlervorhersage zu treffen.

Die Patentanmeldung US 2004/179915 A1 beschreibt eine Werkzeugmaschine. Für die Analyse des Verhaltens der Werkzeugmaschine werden dort als Signaturgrößen bezeichnete Signale erfasst und als Eingangsgrößen für ein künstliches neuronales Netz verwendet.

Das Patent US 8 781 982 B1 beschreibt ein Verfahren und eine Vorrichtung zur Bestimmung der Restnutzungsdauer. Dafür werden Betriebsdaten in ein künstliches neuronales Netz eingespeist. Bei den Betriebsdaten kann es sich um Vibrationsdaten, akustische Daten und Beschleunigungsdaten handeln.

Fräsen ist allgemein ein spanendes Fertigungsverfahren zur Herstellung von Werkstücken mit geometrisch bestimmter Gestalt. Beim Fräsen wird Material entfernt, indem das Fräswerkzeug bzw. Fräskopf mit hoher Geschwindigkeit um seine eigene Achse rotiert, während entweder das Fräswerkzeug selbst die herzustellende Kontur an dem Werkstück abfährt oder das Werkstück entsprechend relativ zu dem Fräskopf bewegt wird. Fräsmaschinen können zum Fräsen unterschiedlicher Werkstücke verwendet werden, insbesondere auch zum Fräsen von Leiterplatten (Printed Circuit Boards). Beispielsweise können durch Fräsen Trennlinien zwischen Leiterbahnflächen einer Leiterplatte hergestellt werden. Während des Fräsprozesses kann eine hohe Menge an Staub entstehen, sodass die Frässpindel nach einer gewissen Betriebszeit steckenbleiben kann. Bei herkömmlichen Fräsmaschinen werden derartige Fehler bzw. Ausfälle erst detektiert, nachdem der jeweilige Fehler, beispielsweise das Blockieren der Frässpindel, aufgetreten ist. Ein Ausfall einer Fräsmaschine während eines Fräsprozesses kann zu einer wesentlichen Verzögerung des Fertigungsprozesses des herzustellenden Objektes führen. Darüber hinaus stellt das in diesem Herstellungsschritt nicht fertiggestellte Werkstück in vielen Fällen ein Ausschussprodukt dar und kann nicht weiterverarbeitet werden. Ein Stillstand einer Fräsmaschine während eines laufenden Herstellungsprozesses erfordert den unverzüglichen Einsatz von Wartungspersonal bzw. Servicetechnikern zur Ausführung der Wartungs- bzw. der Reparaturmaßnahmen. In vielen Fällen sind derartige Servicetechniker nicht sofort verfügbar und müssen angefordert werden. Dies kann zum zeitweisen Stillstand einer ganzen Produktionslinie innerhalb einer Fabrik führen.

Es ist daher eine Aufgabe der vorliegenden Erfindung, ein Verfahren und eine Vorrichtung zur Überwachung eines Fräsprozesses zu schaffen, welche mögliche Ausfälle aufgrund einer betroffenen Fräsmaschine frühzeitig vorhersagt, sodass rechtzeitig Gegenmaßnahmen getroffen werden können.

Diese Aufgabe wird erfindungsgemäß gemäß einem ersten Aspekt der Erfindung durch ein Verfahren zur Überwachung eines Fräsprozesses mit den in Patentanspruch 1 angegebenen Merkmalen gelöst.

Die Erfindung schafft demnach ein Verfahren zur Überwachung eines Fräsprozesses mit den Schritten:
Erfassen einer Rotationsgeschwindigkeit eines Fräskopfes einer Fräsmaschine und mindestens eines weiteren Betriebsparameters der Fräsmaschine während des Fräsprozesses und
Auswerten der erfassten Rotationsgeschwindigkeit und des erfassten Betriebsparameters durch einen trainierten lernfähigen Algorithmus zur Erkennung von Anomalien während des Fräsprozesses.

Mithilfe des erfindungsgemäßen Verfahrens kann die Produktivität der Fräsmaschine deutlich gesteigert werden. Ungewollte Stillstandzeiten der Fräsmaschine werden verhindert. Es kann also der Ausfall einer Fräsmaschine während eines Fräsprozesses vermieden werden. Weiterhin kann die Qualität der in dem Fräsprozess hergestellten Produkte bzw. Zwischenprodukte gesteigert werden. Die Überwachung, insbesondere technische Prüfung, der Funktionsfähigkeit von Werkzeugmaschinen insbesondere Fräsmaschinen ist unter anderem notwendig, um sicherheitswidrige Zustände zu erkennen. Ferner kann die Überwachung zu einer Bewertung der Restlebensdauer der Fräsmaschine genutzt werden. Durch diese Überwachung kann also ein ungeplanter Stillstand vermieden und ein längerer Betrieb der Fräsmaschine erreicht werden.

Bei einer Ausführungsform des erfindungsgemäßen Verfahrens weist der weitere Betriebsparameter einen elektrischen Versorgungsstrom zum Betreiben der Fräsmaschine auf. Dieser Betriebsparameter bietet den Vorteil, dass er relativ einfach mit geringem technischem Aufwand erfasst werden kann.

Bei einer weiteren möglichen Ausführungsform des erfindungsgemäßen Verfahrens wird nach Erkennung von Anomalien ein Hinweis für den Betreiber der Fräsmaschine generiert und auf einer Anzeigeeinheit der Fräsmaschine in Echtzeit angezeigt.

Bei einer weiteren möglichen Ausführungsform des erfindungsgemäßen Verfahrens werden nach Erkennung von Anomalien Wartungsmaßnahmen automatisch eingeleitet.

Hierdurch werden Betriebsstillstandzeiten weiter minimiert.

Bei einer weiteren möglichen Ausführungsform des erfindungsgemäßen Verfahrens wird nach Erkennung von Anomalien während des Fräsprozesses eine Ausfallwahrscheinlichkeit und/oder ein voraussichtlicher Ausfallzeitraum der Fräsmaschine berechnet.

Hierdurch kann die Produktionsplanung des Herstellungsprozesses optimiert werden.

Bei einer weiteren möglichen Ausführungsform des erfindungsgemäßen Verfahrens wird nach Erkennung von Anomalien während des Fräsprozesses mindestens eine mögliche Ursache für das Auftreten der Anomalien ermittelt.

Dies erlaubt es, Wartungs- bzw. Reparaturmaßnahmen gezielt durchzuführen, sodass Ausfall- bzw. Stillstandzeiten der Fräsmaschine reduziert werden.

Bei einer weiteren möglichen Ausführungsform des erfindungsgemäßen Verfahrens weist der trainierte lernfähige Algorithmus ein trainiertes neuronales Netzwerk auf.

Bei einer weiteren möglichen Ausführungsform des erfindungsgemäßen Verfahrens wird der lernfähige Algorithmus vor Beginn eines Produktionsfräsprozesses auf Grundlage von historischen Trainingsdaten hinsichtlich der Rotationsgeschwindigkeit und dem mindestens einen weiteren Betriebsparameter der Fräsmaschine in einer Trainingsphase trainiert.

Bei einer weiteren möglichen Ausführungsform des erfindungsgemäßen Verfahrens wird der lernfähige Algorithmus als Applikation von einer Datenbank über ein Netzwerk in eine Recheneinheit der Fräsmaschine heruntergeladen und in einer Trainingsphase für den Produktionsfräsprozess trainiert.

Bei einer weiteren möglichen Ausführungsform des erfindungsgemäßen Verfahrens wird der lernfähige Algorithmus in Abhängigkeit eines Typs der Fräsmaschine und/oder eines Typs eines in dem Fräsprozess zu fräsenden Werkstückes selektiert.

Bei einer weiteren Ausführungsform des erfindungsgemäßen Verfahrens weist das zu fräsende Werkstück eine Leiterplatine auf.

Bei einer weiteren möglichen Ausführungsform des erfindungsgemäßen Verfahrens werden die Rotationsgeschwindigkeit des Fräskopfes der Fräsmaschine und der mindestens eine weitere Betriebsparameter erfasst und entsprechende Daten mit einer Datenrate von etwa 1/sec einem in der Recheneinheit der Fräsmaschine implementierten trainierten lernfähigen Algorithmus zugeführt.

Bei einer weiteren möglichen Ausführungsform des erfindungsgemäßen Verfahrens werden die Anomalien durch den trainierten lernfähigen Algorithmus in Echtzeit während des Produktionsfräsprozesses ermittelt.

Die Erfindung schafft gemäß einem weiteren Aspekt eine Fräsmaschine zum Fräsen eines Werkstückes mit den in Patentanspruch 11 angegebenen Merkmalen.

Die Erfindung schafft demnach eine Fräsmaschine zum Fräsen eines Werkstückes mit einem drehbaren Fräskopf zur Bearbeitung des Werkstückes in einem Fräsprozess,
einem Elektromotor zum Antreiben des Fräskopfes und mit einem künstlichen Intelligenzmodul, das während des Fräsprozesses auf Basis einer erfassten Rotationsgeschwindigkeit des Fräskopfes und mindestens eines weiteren Betriebsparameters der Fräsmaschine, insbesondere eines Versorgungsstromes des Elektromotors, Anomalien des Fräsprozesses erkennt.

Bei einer weiteren möglichen Ausführungsform der erfindungsgemäßen Fräsmaschine führt das künstliche Intelligenzmodul einen trainierten lernfähigen Algorithmus während des Fräsprozesses aus.

Bei einer weiteren möglichen Ausführungsform der erfindungsgemäßen Fräsmaschine ist das künstliche Intelligenzmodul der Fräsmaschine dazu ausgelegt, bei Erkennung von Anomalien während des Fräsprozesses eine Ausfallwahrscheinlichkeit und/oder einen voraussichtlichen Ausfallzeitraum der Fräsmaschine zu berechnen.

Bei einer weiteren möglichen Ausführungsform der erfindungsgemäßen Fräsmaschine ist das künstliche Intelligenzmodul der Fräsmaschine ferner dazu ausgelegt, mindestens eine mögliche Ursache für das Auftreten der Anomalien während des Fräsprozesses zu ermitteln.

Im Weiteren werden mögliche Ausführungsformen des erfindungsgemäßen Verfahrens und der erfindungsgemäßen Vorrichtung zur Überwachung eines Fräsprozesses unter Bezugnahme auf die beigefügten Figuren näher erläutert.

Es zeigen:
- FIG 1: ein Ablaufdiagramm zur Darstellung einer möglichen Ausführungsform des erfindungsgemäßen Verfahrens zur Überwachung eines Fräsprozesses;
- FIG 2: ein Blockdiagramm zur Darstellung eines Ausführungsbeispiels einer erfindungsgemäßen Fräsmaschine;
- FIG 3: ein Blockdiagramm zur Darstellung einer weiteren möglichen Ausführungsform der erfindungsgemäßen Fräsmaschine.

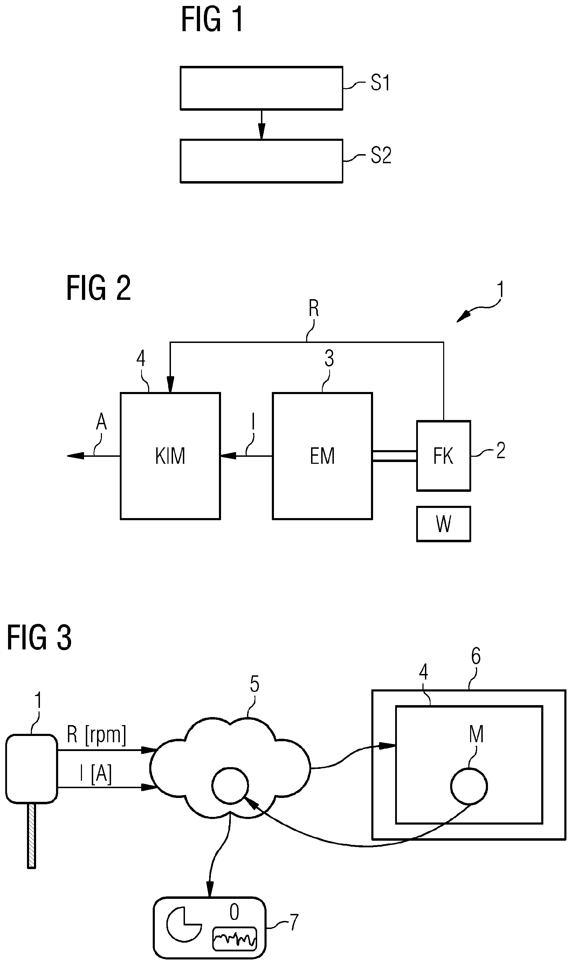

Wie man aus dem Ablaufdiagramm gemäß FIG 1 erkennen kann, weist das erfindungsgemäße Verfahren zur Überwachung eines Fräsprozesses bei der dargestellten Ausführungsform zwei Hauptschritte auf.

In einem ersten Schritt S1 wird eine Rotations- bzw. Drehgeschwindigkeit eines Fräskopfes 2 einer Fräsmaschine 1 erfasst. Weiterhin wird im Schritt S1 mindestens ein weiterer Betriebsparameter der Fräsmaschine 1 während des Fräsprozesses erfasst. Dieser weitere Betriebsparameter weist beispielsweise einen elektrischen Versorgungsstrom zum Betreiben der Fräsmaschine 1 auf. Dieser elektrische Versorgungsstrom dient beispielsweise zur Versorgung eines Elektromotors 3, welcher den Fräskopf 2 der Fräsmaschine 1 antreibt.

In einem weiteren Schritt S2 wird die erfasste Rotationsgeschwindigkeit R und der erfasste Betriebsparameter, insbesondere der elektrische Versorgungsstrom I, durch einen trainierten lernfähigen Algorithmus zur Erkennung von Anomalien A während des Fräsprozesses ausgewertet.

In einem weiteren möglichen Schritt (nicht dargestellt in FIG 1) wird nach Erkennung von Anomalien ein Hinweis für den Betreiber der Fräsmaschine 1 generiert. Beispielsweise können auf einer Anzeigeeinheit der Fräsmaschine 1 in Echtzeit erkannte Anomalien angezeigt werden. Weiterhin können in einem weiteren Schritt automatisch Wartungsmaßnahmen zur Behebung möglicher Ursachen der erkannten Anomalien A automatisch eingeleitet werden. Nach Erkennung von Anomalien während des Fräsprozesses im Schritt S2 wird bei einer möglichen Ausführungsform eine Ausfallwahrscheinlichkeit oder ein voraussichtlicher Ausfallszeitraum der betreffenden Fräsmaschine 1 berechnet. Mögliche Wartungsmaßnahmen können auf die berechnete Ausfallwahrscheinlichkeit und/oder den voraussichtlichen Ausfallzeitraum abgestimmt werden. Beispielsweise werden Fräsmaschinen 1 mit einer hohen Ausfallwahrscheinlichkeit mit einer hohen Dringlichkeit bzw. Priorität gewartet bzw. repariert. Weiterhin kann auf Grundlage der berechneten voraussichtlichen Ausfallzeiträume gesteuert werden, welche Wartungsmaßnahmen an welchen Fräsmaschinen 1 in welchem Zeitraum durchgeführt werden. Bei einer weiteren möglichen Ausführungsform des erfindungsgemäßen Verfahrens wird nach Erkennung von Anomalien während des Fräsprozesses mindestens eine mögliche Ursache für das Auftreten der Anomalien A ermittelt, beispielsweise ein Verschleiß oder Blockieren einer Antriebsspindel. Bei einer möglichen Ausführungsform weist der trainierte lernfähige Algorithmus, welcher zur Erkennung von Anomalien verwendet wird, ein trainiertes neuronales Netzwerk NN auf. Ein lernfähiger Algorithmus, insbesondere das neuronale Netzwerk NN, wird vorzugsweise vor Beginn eines Produktionsfräsprozesses auf Grundlage von historischen Trainingsdaten hinsichtlich der Rotationsgeschwindigkeit R und dem mindestens einen weiteren Betriebsparameter P der Fräsmaschine 1 in einer Trainingsphase trainiert. Das trainierte neuronale Netzwerk NN weist bei einer möglichen Ausführungsform ein RNN (Recurrent Neural Network) auf.

Der zum Erkennen der Anomalien verwendete lernfähige Algorithmus kann bei einer möglichen Ausführungsform als Applikation (App) von einer Datenbank über ein Netzwerk in eine Recheneinheit der Fräsmaschine 1 heruntergeladen und in einer Trainingsphase für den späteren Produktionsfräsprozess trainiert werden. Der verwendete lernfähige Algorithmus kann bei einer möglichen Ausführungsvariante in Abhängigkeit eines Typs der betreffenden Fräsmaschine 1 und/oder eines Typs eines in dem Fräsprozess zu fräsenden Werkstückes W selektiert werden. Bei einer möglichen Ausführungsform weist das durch die Fräsmaschine 1 zu fräsende Werkstück W eine Leiterplatine auf.

Die Erfassung der Rotationsgeschwindigkeit R und des weiteren Betriebsparameters, insbesondere des Versorgungsstromes I, im Schritt S1 erfolgt bei einer möglichen Ausführungsform auf Basis entsprechender Daten, die mit einer Datenrate von etwa 1/sec einem in der Recheneinheit der Fräsmaschine 1 implementierten trainierten lernfähigen Algorithmus zugeführt werden. Die Ermittlung bzw. Erkennung der Anomalien im Schritt S2 durch den trainierten lernfähigen Algorithmus, insbesondere durch ein trainiertes neuronales Netzwerk NN, erfolgt während des Produktionsfräsprozesses vorzugsweise in Echtzeit, d.h. während des Produktionsvorganges.

Insbesondere die Detektion einer oder mehrerer (kurzzeitiger) Stromspitzen des Versorgungsstroms, bspw. von ca. 5 bis 10 Sekunden, wird als Anomalie erkannt. Dabei ist ein plötzlicher Anstieg des Versorgungsstromes mit darauffolgender, langsam abfallender Flanke kennzeichnend. Eine solche Anomalie ist bspw. durch Frässpäne bedingt, die in die Frässpindel gelangen. Dort verursachen die Frässpäne eine erhöhte Reibung. Durch Nachregelung der Versorgungsspannung wird, um eine konstante Drehzahl bzw. Drehgeschwindigkeit des Fräskopfes zu halten, der Versorgungsstrom erhöht (plötzlicher Anstieg). Sind die Frässpäne durch die Drehbewegung der Frässpindel zerrieben, so normalisiert sich der Versorgungsstrom wieder (abfallende Flanke). Dies kann erfolgen, um die Rotationsgeschwindigkeit des Fräskopfes bzw. der Frässpindel konstant zu halten. Zur Erkennung einer Anomalie kann zudem die Abtastrate des Versorgungsstroms geeignet gewählt werden, sodass eine Stromspitze bzw. Anomalie nicht durch Unterabtastung des Versorgungsstroms verpasst wird. Ferner kann die Abtastrate des Versorgungsstroms gleichzeitig ausreichend gering gewählt, so dass keine zu großen Datenmengen anfallen.

Schließlich kann ein Qualitätsindikator gebildet werden, der angibt, ob die detektierten Messpunkte des Versorgungsstroms nicht mehr im Normalbereich der Fräsmaschine liegen. Je höher dieser Wert bspw. ist, desto wahrscheinlicher liegen die Messpunkte außerhalb des Normalbereichs. Der Qualitätsindikator kann dabei als Funktion aus Rotationsgeschwindigkeit und Versorgungsstrom gebildet werden. Anhand der Anzahl der aufgetretenen Anomalien kann dann eine Restlebensdauer bzw. ein Ausfall der Fräsmaschine bestimmt bzw. vorhergesagt werden. Gem. einer Ausführungsform wird also ein Fräsprozess bei dem Frässpäne, bspw. durch das Fräsen einer Leiterplatine, entstehen, überwacht, insbesondere um einen Ausfall bzw. eine Restlebensdauer der Fräsmaschine zu bestimmen bzw. vorherzusagen.

In einer weiteren Ausführungsform wird der Versorgungsstrom dahingehend überwacht, ob eine kurzzeitige bzw. transiente Abweichung von einem Basiswert des Versorgungstroms erfolgt und der Versorgungsstrom wieder auf diesen Basiswert zurücckehrt. Diese Überwachung kann durch einen trainierten lernfähigen Algorithmus erfolgen. Zusätzlich oder alternativ ist es möglich, einen Schwellenwert vorzusehen, durch den eine solche Stromspitze des Versorgungsstroms erkannt wird. Nach Erkennen einer solchen Stromspitze des Versorgungsstroms kann überwacht werden, ob der Versorgungsstrom wieder unter den Schwellenwert, insbesondere auf den Basiswert des Versorgungsstroms absinkt. Bei dem Basiswert kann es sich um den Wert des Versorgungstroms handeln, von dem aus die Stromspitze sich ausbildet. Der Basiswert des Versorgungsstroms kann durch die gewünschte Rotationsgeschwindigkeit der Fräsmaschine, genauer der Spindel der Fräsmaschine, vorgegeben sein, bzw. wird durch den Basiswert des Versorgungsstroms die Rotationsgeschwindigkeit der Fräsmaschine vorgegeben. Zudem kann die Häufigkeit solcher Stromspitzen erfasst werden und in Abhängigkeit davon ein Ausfall der Fräsmaschine bzw. eine Restlebensdauer bestimmt werden, dies kann bspw. durch einen Qualitätsindikator erfolgen.

Um eine Erkennung der Stromspitzen sicherzustellen, ist eine ausreichende Abtastung des Versorgungsstroms erforderlich. Die Abtastung des Versorgungstroms erfolgt derart, dass die Stromspitzen, die durch Frässpäne, die in die Frässpindel gelangt sind, erfasst werden können. Bspw. kann die Abtastung des Versorgungsstroms ca. einmal pro Sekunde bzw. häufiger als einmal pro Sekunde erfolgen.

In einer weiteren Ausführungsform wird überwacht, ob es bei (im Wesentlichen) konstanter bzw. gleichbleibender Rotationsgeschwindigkeit zu einer Änderung, insbesondere einer Stromspitze, des Versorgungsstroms kommt. Diese Änderung des Versorgungsstroms ist dabei bspw. durch das Zermahlen von Frässpänen bedingt. Es kann also der Versorgungsstrom auf durch das Zermahlen von Frässpänen entstehende Stromspitzen, insbesondere bei konstanter Rotationsgeschwindigkeit des Fräskopfes bzw. der Frässpindel, überwacht werden. Diese Stromspitzen können einen typischen Verlauf aufweisen. Dieser, oben beschriebene, typische Verlauf einer Stromspitze kann bspw. durch einen trainierten lernfähigen Algorithmus überwacht und/oder detektiert werden. Zu diesem Zweck kann der lernfähige Algorithmus mit historischen Daten trainiert werden. Eine Stromspitze kann dann von dem trainierten lernfähigen Algorithmus als Anomalie erkannt werden. Insbesondere kann der trainierte lernfähige Algorithmus oben beschriebene durch das Zermahlen von Frässpänen verursachte Stromspitzen von Stromspitzen anderen Ursprungs unterscheiden.

Im Übrigen kann es sich bei dem bearbeiteten Werkstück um ein Werkstück aus einem homogenen Material handeln, bzw. um einen Abschnitt des Werkstücks, der von der Fräsmaschine bearbeitet wird, welcher Abschnitt aus einem homogenen Material besteht. Dadurch wird erreicht, dass von einer gleichbleibenden Rotationsgeschwindigkeit des Fräskopfes ausgegangen werden kann. Bei Inhomogenitäten im Werkstück käme es ansonsten zu Änderungen der Rotationsgeschwindigkeit, bzw. müsste die Rotationsgeschwindigkeit angepasst werden in Abhängigkeit des gerade bearbeiteten Abschnitts des Werkstücks. Es kann somit vorgesehen sein, dass mehrere Abschnitte mit unterschiedlicher vorgegebener Soll-Rotationsgeschwindigkeit bearbeitet werden. dabei kann die jeweilige Soll-Rotationsgeschwindigkeit als Basiswert zum Erkennen von Stromspitzen dienen.

Anstelle des Versorgungsstroms oder Zusammen mit dem Versorgungsstrom kann auch die Versorgungsspannung erfasst und ausgewertet werden. Stattdessen können auch andere von Versorgungstrom und/oder Versorgungsspannung abgeleitete Größen zur Überwachung des Fräsprozesses bzw. zur Vorhersage einer Restlebensdauer bzw. Ausfallwahrscheinlichkeit der Fräsmaschine verwendet werden.

Leiterplatinen bestehen aus elektrisch isolierendem Material mit daran haftenden, leitenden Verbindungen (Leiterbahnen). Als isolierendes Material ist faserverstärkter Kunststoff, bei günstigeren Geräten Hartpapier, üblich. Die Leiterbahnen bestehen zumeist aus einer dünnen Schicht Kupfer. Leiterplatinen können auch durch Fräsen der Kupferschichten strukturiert werden ("Isolationsfräsen", s. u. Bild zu Lötrasterplatinen). Solche Platinen bestehen nicht aus Leiterbahnen, sondern aus Flächen, die voneinander durch Frässpuren getrennt sind.

Bei der Frästechnik werden mit einer Fräsmaschine, bspw. einem Stiftfräser, Trennlinien zwischen den Leiterflächen hergestellt. Dabei bleibt alles Kupfer stehen (Inselverfahren). Die nasschemischen und fotolithografischen Schritte entfallen. Mit spezieller CAD-Software können CNC-Programme generiert werden, so dass Leiterplatinen schnell gefertigt werden können.

FIG 2 zeigt ein Blockschaltbild zur Darstellung einer Ausführungsform einer erfindungsgemäßen Fräsmaschine 1. Die in FIG 2 dargestellte Fräsmaschine 1 dient zum Fräsen eines Werkstückes W. Bei dem Werkstück W handelt es sich beispielsweise um eine Leiterplatine. Die Fräsmaschine 1 verfügt über mindestens einen drehbaren Fräskopf 2 zur Bearbeitung des Werkstückes W in einem Fräsprozess. Der Fräskopf 2 wird durch einen Elektromotor 3 der Fräsmaschine 1 angetrieben. Hierbei bezieht der Elektromotor 3 einen elektrischen Versorgungsstrom. Der Versorgungsstrom kann eine oder mehrere Stromphasen umfassen (L1, L2, L3). Die erfindungsgemäße Fräsmaschine 1 verfügt über ein künstliches Intelligenzmodul 4, wie in FIG 2 dargestellt. Das künstliche Intelligenzmodul 4 erkennt während des Fräsprozesses auf Basis einer erfassten Rotationsgeschwindigkeit R des Fräskopfes 2 und mindestens eines weiteren Betriebsparameters P der Fräsmaschine 1 Anomalien, die während des Fräsprozesses auftreten. Das künstliche Intelligenzmodul 4 kann mehrere Betriebsparameter P zur Erkennung von Anomalien A auswerten. Bei einer möglichen Ausführungsform führt das künstliche Intelligenzmodul 4 einen trainierten lernfähigen Algorithmus während des Fräsprozesses aus.

Das künstliche Intelligenzmodul 4 implementiert bei einer möglichen Ausführungsform ein trainiertes neuronales Netzwerk NN mit mehreren Schichten. Das trainierte neuronale Netzwerk NN weist eine Eingangsschicht, eine oder mehrere Zwischenschichten (hidden layers) und eine Ausgangsschicht auf. In jeder Schicht (layer) befinden sich neuronale Knoten mit entsprechenden Aktivierungsfunktionen. Die neuronalen Knoten der verschiedenen Schichten sind miteinander verknüpft, wobei die Verknüpfungen gewichtet sind.

Die Einstellung der Gewichtungsfaktoren w erfolgt in der Trainingsphase. Das künstliche Intelligenzmodul 4 bzw. neuronale Netzwerk kann in dem ablaufenden Fräsprozess weiter trainiert werden. Bei einer möglichen Ausführungsform erfolgt das Training des künstlichen Intelligenzmoduls 4 in einem unüberwachten (unsupervised) Lernprozess. Der Lernprozess erfolgt vorzugsweise auf Grundlage historischer Trainingsdaten. Diese historischen Trainingsdaten umfassen beispielsweise historische Stromversorgungsdaten sowie historische Rotationsgeschwindigkeitsdaten des Fräskopfes 2. Diese historischen Trainingsdaten befinden sich in einem Datenspeicher. Bei einer möglichen Ausführungsform werden die Trainingsdaten von einer Datenbank des Betreibers der Fräsmaschine geladen und zu Trainingszwecken herangezogen.

Der verwendete lernfähige Algorithmus, beispielsweise das verwendete neuronale Netzwerk NN, kann bei einer möglichen Ausführungsform in Abhängigkeit eines Typs der Fräsmaschine 1 und/oder eines Typs eines im Fräsprozess zu fräsenden Werkstückes W selektiert werden. Der lernfähige Algorithmus kann bei einer möglichen Ausführungsform ebenfalls von einer Datenbank in das künstliche Intelligenzmodul 4 der Fräsmaschine 1 heruntergeladen werden. Beispielsweise können Trainingsdaten und geeignete lernfähige Algorithmen über ein Datennetz von einer Cloud-Plattform 6 eines Fräsmaschinenherstellers oder eines Fräsmaschinenbetreibers heruntergeladen werden. Beispielsweise wird ein lernfähiger Algorithmus heruntergeladen, der zur Überwachung eines Fräsprozesses an Leiterplatinen geeignet ist. Bei einer möglichen Ausführungsform liegt an der Eingangsschicht des neuronalen Netzwerkes ein Vektor an, der verschiedene Betriebsparameter P der Fräsmaschine 1 umfasst. Dieser Zustandsvektor z weist beispielsweise zwei Betriebsparameter P auf, insbesondere die Rotationsgeschwindigkeit R des Fräskopfes 2 und den von dem Elektromotor 3 bezogenen elektrischen Strom I. Der Zustandsvektor z, welcher an die Eingangsschicht des neuronalen Netzwerkes NN angelegt wird, kann weitere Betriebsparameter P umfassen, je nach Anwendungsfall. Beispielsweise kann jede Phase L eines mehrphasigen Versorgungsstromes einen Betriebsparameter P darstellen. Als Ausgabewerte kann das künstliche Intelligenzmodul 4 eine berechnete Ausfallwahrscheinlichkeit der Fräsmaschine 1, insbesondere für einen voraussichtlichen Ausfallzeitraum, ausgeben. Über eine Nutzerschnittstelle können zudem erkannte Anomalien A an einen Nutzer der Fräsmaschine 1 in Echtzeit ausgegeben werden. Der Fräsprozess selbst kann bei einer möglichen Ausführungsform durch ein CNC-Programm gesteuert werden, welcher von einem Controller bzw. Mikroprozessor der erfindungsgemäßen Fräsmaschine 1 ausgeführt wird. Während des Fräsprozesses erfolgt eine Vorschubbewegung des Fräskopfes 2 senkrecht oder schräg zur Rotationsachse des Fräskopfes 2. Handelt es sich bei dem Werkstück W um eine Leiterplatine, wird die Fräsmaschine 1 gesteuert durch eine Software bzw. ein CNC-Programm Bahnen generieren, die entlang einer gewünschten Leiterbahn herumführen. Beispielsweise wird die herzustellende Leiterbahn von einem restlichen leitfähigen Material, beispielsweise Kupfer, isoliert. Dies wird auch als Isolationsfräsen bezeichnet. Zum Fräsen von Isolationskanälen kann ein kleiner konischer Fräskopf zum Einsatz kommen, der entlang der berechneten Bewegungsbahnen leitfähiges Material, insbesondere Kupfer, abträgt. Das abgetragene Material kann zu einer Blockierung bzw. einer Beeinträchtigung der Bewegungsfähigkeit des Fräskopfes 2 führen, wobei derartige Auffälligkeiten bzw. Anomalien mithilfe des erfindungsgemäßen Verfahrens frühzeitig erkannt bzw. detektiert werden. Bei einer möglichen Ausführungsform können für verschiedene Anomalien A auch entsprechende Bewertungszahlen berechnet werden, welche das Ausmaß der erkannten Anomalie bzw. die daraus resultierende Ausfallwahrscheinlichkeit angeben. Derartige Anomaliekennzahlen können bei einer möglichen Ausführungsform in Echtzeit über eine Anzeigeeinheit an den Betreiber der Fräsmaschine 1 ausgegeben werden. Mit dem erfindungsgemäßen Verfahren können mögliche Anomalien während des laufenden Fräsprozesses rund um die Uhr erkannt werden und mögliche Fehlerursachen ermittelt werden. Hierdurch können rechtzeitig Reparatur- bzw. Wartungsmaßnahmen an der betreffenden Fräsmaschine 1 eingeleitet bzw. ausgeführt werden, sodass Stillstandzeiten innerhalb des Fräsprozesses weitestgehend vermieden werden. Das erfindungsgemäße Verfahren kann für eine Vielzahl von Fräsmaschinen verwendet werden, die gleichzeitig in einer Produktionslinie zum Einsatz kommen.

Bei der in FIG 2 dargestellten Ausführungsform ist das künstliche Intelligenzmodul 4 lokal in einer Recheneinheit der Fräsmaschine 1 implementiert. Bei einer alternativen Ausführungsform kann das künstliche Intelligenzmodul 4 auch auf einem entfernten Server einer Cloud-Plattform 6 implementiert sein, welcher über eine Datenverbindung mit einer Steuerung der Fräsmaschine 1 bidirektional kommuniziert. Die technische Datenverbindung umfasst bei einer möglichen Ausführungsform ein lokales Netz bzw. Intranet. Alternativ kann es sich bei der Datenverbindung auch um ein globales Netz bzw. das Internet handeln. Das erfindungsgemäße Verfahren zur Überwachung des Fräsprozesses ist ein computerimplementiertes Verfahren, welches bei einer möglichen Ausführungsform auf einem computerlesbaren Medium gespeichert ist. Das computerlesbare Medium umfasst beispielsweise einen Datenspeicher der Fräsmaschine 1. Weiterhin kann das computerlesbare Medium auch einen tragbaren Datenträger aufweisen, beispielsweise eine CD-ROM oder einen USB-Stick. Je nach Anwendungsfall können bei einer möglichen Ausführungsform verschiedene lernfähige Algorithmen zur Erkennung von Anomalien während des Fräsprozesses eingesetzt werden. Beispielsweise kann eine Supportvektormaschine zur Berechnung eines Qualitätsindikators vorgesehen sein. Bei einer möglichen Ausführungsform sind in der Umgebung des Fräskopfes 2 weitere Sensoren vorgesehen, die zusätzliche Daten an das künstliche Intelligenzmodul 4 liefern. Beispielsweise können Bildsensoren Bilddaten an das künstliche Intelligenzmodul 4 als Eingangsbetriebsparameter P des Zustandsvektors z liefern. Hierdurch kann die Zuverlässigkeit bzw. Genauigkeit des erfindungsgemäßen Verfahrens weiter erhöht werden.

FIG 3 zeigt schematisch ein weiteres Ausführungsbeispiel der erfindungsgemäßen Vorrichtung zur Überwachung eines Fräsprozesses. Bei dem dargestellten Ausführungsbeispiel liefert die Fräsmaschine 1 über eine Schnittstelle erfasste Betriebsparameter über ein Datennetzwerk bzw. eine Cloud 5 an eine Cloud-Plattform 6, in der ein künstliches Intelligenzmodul 4 integriert ist. Über eine Anzeigevorrichtung 7 können in Echtzeit Anomalien bzw. Hinweise an den Betreiber der Fräsmaschine 1 ausgegeben werden. Die Anzeigevorrichtung 7 ist bei einer möglichen Ausführungsform ebenfalls an das Datennetzwerk bzw. die Cloud 5 angebunden. Bei einer möglichen Ausführungsvariante ist die Anzeigevorrichtung 7 ein tragbares Gerät, beispielsweise ein Smartphone des Nutzers. Mit dem erfindungsgemäßen Verfahren werden frühzeitig Abweichungen in den Merkmalsraum der Betriebsparameter detektiert. Mithilfe eines Datenmodells M können zudem Ursachen für das Auftreten von Anomalien bzw. Ausfällen der Fräsmaschine 1 automatisch ermittelt werden. Dieses Datenmodell M beschreibt vorzugsweise den strukturellen Aufbau der Fräsmaschine 1, beispielsweise als Ontologie. Bei dem in FIG 3 dargestellten Ausführungsbeispiel werden zwei Merkmale bzw. Betriebsparameter P, nämlich der elektrische Versorgungsstrom I und die Rotationsgeschwindigkeit R, verwendet, um den lernfähigen Algorithmus bzw. das neuronale Netzwerk zu trainieren. Bei einer möglichen Ausführungsform benötigt der trainierte lernfähige Algorithmus einen relativ geringen Speicherplatz von weniger als 10 MB. Dies erlaubt es, den lernfähigen Algorithmus von einer Cloud-Plattform 6 auf einem Automatisierungsgerät zu implementieren. Das erfindungsgemäße Verfahren ist in einer einfachen Weise für eine Vielzahl von Fräsmaschinen 1 skalierbar. Bei einer möglichen Ausführungsform liefert das künstliche Intelligenzmodul 4 Bewertungszahlen der erkannten Anomalien bzw. mögliche Ausfallwahrscheinlichkeiten. Bei einer möglichen Ausführungsform des erfindungsgemäßen Verfahrens erfolgt die Auswertung der Betriebsparameter P mithilfe eines trainierten lernfähigen Algorithmus auf einem Server der Cloud-Plattform 6 auf Grundlage von Betriebsdaten, die von einer oder mehreren Fräsmaschinen über das Netzwerk 5 an den Server der Cloud-Plattform 6 übertragen werden. Der lernfähige Algorithmus kann bei einer möglichen Ausführungsform als Applikation von einer Datenbank heruntergeladen werden und durch das künstliche Intelligenzmodul 4 nach erfolgtem Training ausgeführt werden. Das künstliche Intelligenzmodul 4 kann bei einer möglichen Ausführungsform lokal in der Fräsmaschine 1 vorgesehen sein, wie in FIG 2 dargestellt, oder entfernt auf einem Server einer Cloud-Plattform 6 implementiert sein, wie in FIG 3 dargestellt.

## Patentansprüche

1. Verfahren zur Überwachung eines Fräsprozesses einer Leiterplatine mit den Schritten:
(a) Erfassen (S1) einer Rotationsgeschwindigkeit eines Fräskopfes (2) einer Fräsmaschine (1) und mindestens eines weiteren Betriebsparameters der Fräsmaschine (1) während des Fräsprozesses; wobei es sich bei dem weiteren Betriebsparameter um einen elektrischen Versorgungsstrom zum Betreiben der Fräsmaschine handelt, wobei bei gleichbleibender Rotationsgeschwindigkeit eine, insbesondere durch Frässpäne bedingte, bevorzugt durch Zermahlen von Frässpänen durch die Frässpindel bedingte, Stromspitze des Versorgungsstroms erfasst wird,
wobei eine Abtastung des Versorgungstroms derart erfolgt, dass die Stromspitzen, die durch Frässpäne, die in die Frässpindel gelangt sind, erfasst werden,
(b) Auswerten (S2) der erfassten Rotationsgeschwindigkeit und des erfassten Betriebsparameters durch einen trainierten lernfähigen Algorithmus zur Erkennung von Anomalien während des Fräsprozesses,
wobei eine durch Zermahlen von Frässpänen bedingte Stromspitze des Versorgungsstroms erfasst wird, welche Stromspitze einen charakteristischen Verlauf aufweist, der von dem trainierten lernfähigen Algorithmus erkannt wird.

2. Verfahren nach Anspruch 1,
wobei nach Erkennung von Anomalien ein Hinweis für den Betreiber der Fräsmaschine (1) generiert und auf einer Anzeigeeinheit der Fräsmaschine (1) in Echtzeit angezeigt wird und/oder Wartungsmaßnahmen automatisch eingeleitet werden.

3. Verfahren nach einem der vorangehenden Ansprüche 1 oder 2,
wobei nach Erkennung von Anomalien während des Fräsprozesses eine Ausfallwahrscheinlichkeit und/oder ein voraussichtlicher Ausfallzeitraum der Fräsmaschine (1) berechnet wird.

4. Verfahren nach einem der vorangehenden Ansprüche 1 bis 3, wobei nach Erkennung von Anomalien während des Fräsprozesses mindestens eine mögliche Ursache für das Auftreten der Anomalien ermittelt wird.

5. Verfahren nach einem der vorangehenden Ansprüche 1 bis 4, wobei der trainierte lernfähige Algorithmus ein trainiertes neuronales Netzwerk aufweist.

6. Verfahren nach einem der vorangehenden Ansprüche 1 bis 5, wobei der lernfähige Algorithmus vor Beginn eines Produktionsfräsprozesses auf Grundlage von historischen Trainingsdaten hinsichtlich der Rotationsgeschwindigkeit und dem mindestens einen weiteren Betriebsparameter der Fräsmaschine in einer Trainingsphase trainiert wird.

7. Verfahren nach einem der vorangehenden Ansprüche 1 bis 6, wobei der lernfähige Algorithmus als Applikation von einer Datenbank über ein Netzwerk in eine Recheneinheit der Fräsmaschine (1) heruntergeladen und in einer Trainingsphase für den Produktionsfräsprozess trainiert wird.

8. Verfahren nach Anspruch 1,
wobei ein Qualitätsindikator, bspw. vermittels des trainierten lernfähigen Algorithmus, unter Verwendung von Rotationsgeschwindigkeit und weiterem Betriebsparameter gebildet wird und der Qualitätsindikator zur Bestimmung, bspw. vermittels des trainierten lernfähigen Algorithmus, einer oder mehrerer Anomalien verwendet wird.

9. Verfahren nach einem der vorangehenden Ansprüche 1 bis 8, wobei die Rotationsgeschwindigkeit des Fräskopfes (2) der Fräsmaschine (1) und der mindestens eine weitere Betriebsparameter erfasst werden und entsprechende Daten mit einer Datenrate von etwa 1/sec einem in der Recheneinheit der Fräsmaschine (1) implementierten trainierten lernfähigen Algorithmus zugeführt werden.

10. Verfahren nach einem der vorangehenden Ansprüche 1 bis 9, wobei die Anomalien durch den trainierten lernfähigen Algorithmus in Echtzeit während des Produktionsfräsprozesses ermittelt werden.

11. Fräsmaschine (1) zum Fräsen eines Werkstückes (W), wobei es sich bei dem Werkstück um eine Leiterplatine handelt, mit
- einem drehbaren Fräskopf (2) zur Bearbeitung des Werkstückes (W) in einem Fräsprozess,
- einem Elektromotor (3) zum Antreiben des Fräskopfes (2) und
mit einem künstlichen Intelligenzmodul (4), das während des Fräsprozesses auf Basis einer erfassten Rotationsgeschwindigkeit des Fräskopfes (2) und mindestens eines weiteren Betriebsparameters der Fräsmaschine (1) Anomalien des Fräsprozesses erkennt, wobei es sich bei dem weiteren Betriebsparameter um einen Versorgungsstrom des Elektromotors (3) handelt,
wobei das Intelligenzmodul ferner dazu dient, bei gleichbleibender Rotationsgeschwindigkeit, eine, insbesondere durch Frässpäne bedingte, bevorzugt durch Zermahlen von Frässpänen durch die Frässpindel bedingte, Stromspitze des Versorgungsstroms zu erfassen,
wobei eine Abtastung des Versorgungstroms derart erfolgt, dass die Stromspitzen, die durch Frässpäne, die in die Frässpindel gelangt sind, erfasst werden,
wobei das Intelligenzmodul dazu dient, eine durch Zermahlen von Frässpänen bedingte und einen charakteristischen Verlauf aufweisende Stromspitze des Versorgungsstroms zu erfassen und vermittels eines trainierten lernfähigen Algorithmus zu erkennen.

12. Fräsmaschine nach Anspruch 11,
wobei das künstliche Intelligenzmodul (4) einen trainierten lernfähigen Algorithmus während des Fräsprozesses ausführt.

13. Fräsmaschine nach Anspruch 11 oder 12,
wobei das künstliche Intelligenzmodul (4) der Fräsmaschine (1) dazu ausgelegt ist bei Erkennung von Anomalien während des Fräsprozesses eine Ausfallwahrscheinlichkeit und/oder einen voraussichtlichen Ausfallzeitraum der Fräsmaschine (1) zu berechnen und/oder mindestens eine mögliche Ursache für das Auftreten der Anomalien während des Fräsprozesses zu ermitteln.

14. Fräsmaschine nach einem der Ansprüche 11 bis 13,
wobei das Intelligenzmodul dazu dient, einen Qualitätsindikator unter Verwendung von Rotationsgeschwindigkeit und weiterem Betriebsparameter zu bilden und der Qualitätsindikator zur Bestimmung, bspw. ebenfalls unter Verwendung des trainierten lernfähigen Algorithmus, einer oder mehrerer Anomalien dient.

## Claims

1. Method for monitoring a milling process of a printed circuit board having the steps:
(a) detecting (S1) a rotational speed of a milling head (2) of a milling machine (1) and at least one further operating parameter of the milling machine (1) during the milling process; wherein the further operating parameter is an electrical supply current for operating the milling machine, wherein in the case of a constant rotational speed a current spike of the supply current that is due in particular to mill chippings, preferably by comminuting mill chippings by the milling spindle, is detected,
wherein the supply current is sampled in such a manner that the current spikes as a result of mill chippings, which have passed into the milling spindle, are detected,
(b) evaluating (S2) the detected rotational speed and the detected operating parameter by a trained adaptive algorithm for identifying anomalies during the milling process,
wherein a current spike of the supply current that is due to the comminuting of mill chippings is detected, said current spike having a characterising progression that is identified by the trained adaptive algorithm.

2. Method according to claim 1,
wherein after anomalies have been identified, a notification is generated for the operator of the milling machine (1) and displayed on a display unit of the milling machine (1) in real time and/or maintenance measures are automatically initiated.

3. Method according to one of the preceding claims 1 or 2, wherein after anomalies have been identified during the milling process, a probability of failure and/or an anticipated outage period of the milling machine (1) is calculated.

4. Method according to one of the preceding claims 1 to 3, wherein after anomalies have been identified during the milling process at least one possible cause for the occurrence of the anomalies is determined.

5. Method according to one of the preceding claims 1 to 4, wherein the trained adaptive algorithm has a trained neural network.

6. Method according to one of the preceding claims 1 to 5, wherein the adaptive algorithm is trained in a training phase prior to the commencement of the production milling process on the basis of historical training data with respect to the rotational speed and the at least one further operating parameter of the milling machine.

7. Method according to one of the preceding claims 1 to 6, wherein the adaptive algorithm is downloaded as an application from a database by way of a network into a computing unit of the milling machine (1) and trained in a training phase for the production milling process.

8. Method according to claim 1,
wherein a quality indicator is formed, for example by means of the trained adaptive algorithm, using a rotational speed and further operating parameters and the quality indicator is used for determining, for example by means of the trained adaptive algorithm, one or multiple anomalies.

9. Method according to one of the preceding claims 1 to 8, wherein the rotational speed of the milling head (2) of the milling machine (1) and the at least one further operating parameter are detected and corresponding data supplied at a data rate of approximately 1/sec to a trained adaptive algorithm that is implemented in the computing unit of the milling machine (1).

10. Method according to one of the preceding claims 1 to 9, wherein the anomalies are determined by a trained adaptive algorithm in real time during the production milling process.

11. Milling machine (1) for milling a workpiece (W), wherein the workpiece is a printed circuit board, having
- a rotatable milling head (2) for processing the workpiece (W) in a milling process,
- an electric motor (3) for driving the milling head (2) and
having an artificial intelligence module (4) that during the milling process identifies anomalies of the milling process on the basis of a detected rotational speed of the milling head (2) and at least one further operating parameter of the milling machine (1), wherein the further operating parameter is a supply current to the electric motor (3),
wherein the intelligence module further serves so as to detect, for example in the case of a constant rotational speed, a current spike of the supply current that is due in particular to mill chippings, preferably to the comminuting of mill chippings by the milling spindle,
wherein the supply current is sampled in such a manner that the current spikes as a result of mill chippings, which have passed into the milling spindle, are detected,
wherein the intelligence module serves so as to detect and identify by means of a trained adaptive algorithm a current spike of the supply current that is due to the comminuting of mill chippings and has a characteristic curve.

12. Milling machine according to claim 11,
wherein the artificial intelligence module (4) implements a trained adaptive algorithm during the milling process.

13. Milling machine according to claim 11 or 12,
wherein the artificial intelligence module (4) of the milling machine (1) is configured so as in the event that anomalies are identified during the milling process to calculate a probability of failure and/or an anticipated outage period of the milling machine 1 and/or
to determine at least one possible cause for the occurrence of the anomalies during the milling process.

14. Milling machine according to one of claims 11 to 13,
wherein the intelligence module serves so as to form a quality indicator using the rotational speed and further operating parameters and the quality indicator serves to determine, for example likewise using the trained adaptive algorithm, one or multiple anomalies.

## Revendications

1. Procédé de contrôle d'une opération de fraisage d'une plaquette à circuit imprimé comprenant les stades :
(a) détection (S1) d'une vitesse de rotation d'une tête (2) de fraisage d'une machine (1) de fraisage et d'au moins un autre paramètre de fonctionnement de la machine (1) de fraisage pendant l'opération de fraisage ; l'autre paramètre étant un courant électrique d'alimentation pour le fonctionnement de la machine de fraisage, dans lequel, à vitesse de rotation restant la même, on détecte une pointe du courant d'alimentation due notamment à des copeaux de fraisage, due, de préférence, à la pulvérisation de copeaux de fraisage par la broche de fraisage,
dans lequel il est effectué une analyse du courant d'alimentation, de manière à détecter les pointes de courant qui, par des copeaux de fraisage, sont arrivées dans la broche de fraisage,
(b) exploitation (S2) de la vitesse de rotation détectée et du paramètre de fonctionnement détecté par un algorithme d'apprentissage ayant subi un apprentissage pour la détection d'anomalies pendant l'opération de fraisage, dans lequel on détecte une pointe du courant d'alimentation due à la pulvérisation de copeaux de fraisage, laquelle pointe de courant a une allure caractéristique, qui est reconnue par l'algorithme d'apprentissage ayant subi un apprentissage.

2. Procédé suivant la revendication 1,
dans lequel, après avoir reconnu des anomalies, on produit une indication pour l'opérateur de la machine (1) de fraisage et on l'affiche en temps réel sur une unité d'affichage de la machine (1) de fraisage et/ou on lance automatiquement des mesures d'entretien.

3. Procédé suivant l'une des revendications 1 ou 2 précédentes, dans lequel, après avoir reconnu des anomalies pendant l'opération de fraisage, on calcule une probabilité de défaillance et/ou un laps de temps de défaillance prévisible de la machine (1) de fraisage.

4. Procédé suivant l'une des revendications 1 à 3 précédentes, dans lequel, après avoir reconnu des anomalies pendant l'opération de fraisage, on détermine au moins une cause possible de l'apparition des anomalies.

5. Procédé suivant l'une des revendications 1 à 4 précédentes, dans lequel l'algorithme d'apprentissage ayant subi un apprentissage a un réseau neuronal ayant subi un apprentissage.

6. Procédé suivant l'une des revendications 1 à 5 précédentes, dans lequel on fait subir un apprentissage, dans une phase d'apprentissage, à l'algorithme d'apprentissage, avant le début d'une opération de fraisage de production, sur la base de données d'apprentissage historiques en ce qui concerne la vitesse de rotation et le au moins un autre paramètre de fonctionnement de la machine de fraisage.

7. Procédé suivant l'une des revendications 1 à 6 précédentes, dans lequel on charge l'algorithme d'apprentissage comme application d'une base de données par l'intermédiaire d'un réseau dans une unité informatique de la machine (1) de fraisage et on lui fait subir un apprentissage dans une phase d'apprentissage de l'opération de fraisage de production.

8. Procédé suivant la revendication 1,
dans lequel on forme un indicateur de qualité, par exemple au moyen d'un algorithme d'apprentissage ayant subi un apprentissage, en utilisant la vitesse de rotation et l'autre paramètre de fonctionnement et on utilise l'indicateur de qualité pour la détermination, par exemple à l'aide de l'algorithme d'apprentissage ayant subi un apprentissage, d'une ou de plusieurs anomalies.

9. Procédé suivant l'une des revendications 1 à 8 précédentes, dans lequel on détecte la vitesse de rotation de la tête (2) de fraisage de la machine (1) de fraisage et le au moins un autre paramètre de fonctionnement et on envoie des données correspondantes à un débit de données d'environ 1/sec à un algorithme d'apprentissage ayant subi un apprentissage mis en œuvre dans l'unité informatique de la machine (1) de fraisage.

10. Procédé suivant l'une des revendications 1 à 9 précédentes, dans lequel on détermine les anomalies par l'algorithme d'apprentissage ayant subi un apprentissage en temps réel pendant l'opération de fraisage de production.

11. Machine (1) de fraisage pour fraiser une pièce (W), la pièce étant une plaquette à circuit imprimé, comprenant
- une tête (2) de fraisage tournante pour l'usinage de la pièce (W) dans une opération de fraisage,
- un moteur (3) électrique pour l'entraînement de la tête (2) de fraisage, et
comprenant un module (4) intelligent artificiel, qui reconnaît des anomalies de l'opération de fraisage, sur la base d'une détection de la vitesse de rotation de la tête (2) de fraisage et d'au moins un autre paramètre de fonctionnement de la machine (1) de fraisage, l'autre paramètre de fonctionnement étant un courant d'alimentation du moteur (3) électrique,
dans laquelle le module intelligent sert en outre à détecter, à vitesse de rotation restant la même, une pointe du courant d'alimentation, notamment due à des copeaux de fraisage, due de préférence à la pulvérisation de copeaux de fraisage par la broche de fraisage,
dans laquelle il est effectué une analyse du courant d'alimentation, de manière à détecter les pointes de courant qui, par des copeaux de fraisage, sont arrivées à la broche de fraisage,
dans laquelle le module intelligent sert à détecter une pointe du courant d'alimentation due à la pulvérisation de copeaux de fraisage et ayant une allure caractéristique et à la reconnaître au moyen d'un algorithme d'apprentissage ayant subi un apprentissage.

12. Machine de fraisage suivant la revendication 11,
dans laquelle le module (4) intelligent artificiel exécute un algorithme d'apprentissage ayant subi un apprentissage pendant l'opération de fraisage.

13. Machine de fraisage suivant la revendication 11 ou 12,
dans laquelle le module (4) intelligent artificiel de la machine (1) de fraisage est conçu pour, à la reconnaissance d'anomalies pendant l'opération de fraisage, calculer une probabilité de défaillance et/ou un laps de temps de défaillance prévisible de la machine (1) de fraisage et/ou déterminer au moins une cause possible de l'apparition des anomalies pendant l'opération de fraisage.

14. Machine de fraisage suivant l'une des revendications 11 à 13,
dans lequel le module intelligent sert à former un indicateur de qualité en utilisant la vitesse de rotation et l'autre paramètre de fonctionnement et l'indicateur de qualité sert à la détermination, par exemple également en utilisant l'algorithme d'apprentissage ayant subi un apprentissage, d'une ou de plusieurs anomalies.
